# EUROPEAN PATENT SPECIFICATION

(11) **EP 1 722 526 B1**
(45) Date of publication and mention of the grant of the patent: **06.07.2011**
(21) Application number: 06009542.9
(22) Date of filing: 09.05.2006
(51) Int. Cl.: H04L 12/58, H04M 1/725

(54) **Method and apparatus for performing an instant messenger function using a local area network**
Verfahren und Vorrichtung zum Durchführen eines sofortigen Nachrichtendienstes mittels eines lokalen Netzwerks
Procédé et dispositif pour la mise en oeuvre d'une fonction de messagerie instantanée par un réseau local

(30) Priority: 09.05.2005 KR 20050038551; 13.06.2005 KR 20050050353
(43) Date of publication of application: 15.11.2006
(73) Proprietor: LG Electronics Inc., Seoul 150-875 (KR)
(72) Inventor: Kim, Min Jung, Geumcheon-gu Seoul 153-856 (KR); Park, Myung Eun, Seocho-gu Seoul 137-900 (KR); Son, Jin Ho, Gwacheon-si Gyeonggi-do 427-736 (KR)
(74) Representative: Katérle, Axel

(56) References cited:
- EP-A- 1 370 050
- WO-A-03/087992
- US-A1- 2005 076 124
- JAYANNA D ET AL: "A Dynamic and Distributed Scatternet Formation Protocol for Real-life Bluetooth Scatternets" IEEE: PROCEEDINGS OF THE 38TH HAWAII INTERNATIONAL CONFERENCE ON SYSTEM SCIENCES, 3 January 2005 (2005-01-03), pages 1-10, XP010762913

## Description

### BACKGROUND OF THE INVENTION

### Field of the Invention

This invention is directed to a method and apparatus for performing an instant messenger function using a local area network (LAN).

### Description of the Related Art

Along with development of communication technologies, various short-range radio communication technologies for implementing a wireless communication at a short range have been developed. One of these short-range wireless communication technologies is Bluetooth (BT).

BT has evolved since version 1.0 was published as an official standard in July 1999. A maximum data transmission speed of Bluetooth is 1 Mbps, with an effective bi-directional transmission speed of 433.9 kbps in consideration of a packet header and a uni-directional transmission speed of 723.2 kbps with a transmission speed of 57.6 kbps in the other direction. Transmission distance is approximately 10 meters with 1 mW of transmission power and a maximum transmission power is 100 Mw.

BT operates in the unlicensed ISM (Industrial, Scientific, Medical) band at 2.4000-2.4835 GHz and can support 79 channels on a 1 MHz bandwidth. Data is transmitted by changing approximately 1,600 channels per second in a Frequency Hopping Spread Spectrum method.

BT can transmit accurate data even in a noisy environment via communication using the Frequency Hopping Spread Spectrum method and can avoid frequency interference by hopping to a new frequency channel after transmission and reception of a predetermined packet. Therefore, BT communication hops faster than any other system operating in the same frequency bandwidth and can transmit data more stably using a shorter packet. In addition to BT, various other short-range wireless communication technologies are known, such as Zigbee, UWB (Ultra Wide Band) and LAN (Local Area Network).

The short-range communication, which is intended to replace wired communication with wireless communication, has a very wide field of use anticipated to continuously broaden. As short-range wireless communication technologies are integrated into various portable terminals, such as mobile communication terminals, the portable terminals enable communication via the short-range communication without using a base station that imposes a use charge. Furthermore, short-range communication can perform various instant messenger services, such as message exchanges, data transmissions and games.

In order to enable portable terminals to perform an instant messenger function, the portable terminals should be registered with user information of messenger objects. For example, user information such as user names, titles of conversations, avatars, telephone numbers, photographs and addresses for short-range communication modules should be registered.

Furthermore, if an instant messenger function is implemented by short-range communication, a search should be performed to determine whether the messenger objects are located within a short-range communication area of the portable terminals and a result of the search should be briefly indicated to the users of the portable terminals. The messenger objects may change any time the user information, such as avatars and photographs, changes and it is necessary to update the user information of the changed messenger objects.

WO 03/087992 A2 discloses a technique for exchanging persona information between user devices in a network. Each device has the capability of identifying devices in a network environment via a discovery process and to determine what communications protocol is being used. A communication may be performed via Bluetooth or similar wireless protocols. The user devices may broadcast overview messages including persona information in the network. Receiving devices may analyse the overview message and may reply by providing their persona information to the originating device. Therein, the received persona information may be analysed. Based on the persona information, a user may seek to initiate a relationship with another user, for example by initiating a conversation such as an instant messaging session etc.

EP 1 370 050 A1 disposes a technique for a profile push and profile comparison between two user devices in a short-range wireless environment. An inquiring device may send an inquiry message searching for other devices in its vicinity. Another device listening for an inquiry message may respond, which leads to the establishment of a connection for exchanging all or a part of personal profiles of the enquiring device and the responding user terminal.

Therefore, there is a need for a method and apparatus for efficiently performing an instant messenger function. The present invention addresses these and other needs.

### SUMMARY OF THE INVENTION

Features and advantages of the invention will be set forth in the description which follows, and in part will be apparent from the description, or may be learned by practice of the invention. The objectives and other advantages of the invention will be realized and attained by the structure particularly pointed out in the written description and claims hereof as well as the appended drawings.

A first object of the present invention is to provide a method as defined in claim 1 for performing an instant messenger function. A second object of the present invention is to provide a method as defined in claim 14.. A third object of the present invention is to provide an apparatus as defined in claim 17.

In one aspect of the present invention, a method for performing an instant messenger function in a portable terminal according to the appended claim 1 is provided.

In another aspect of the present invention, a method for performing an instant messenger function among a first and a second portable terminal according to the appended claim 14 is provided. .

In another aspect of the present invention, a portable terminal for performing an instant messenger function according to the appended claim 17 is provided.

Additional features and advantages of the invention will be set forth in the description which follows, and in part will be apparent from the description, or may be learned by practice of the invention. It is to be understood that both the foregoing general description and the following detailed description of the present invention are exemplary and explanatory and are intended to provide further explanation of the invention as claimed. These and other embodiments will also become readily apparent to those skilled in the art from the following detailed description of the embodiments having reference to the attached figures, the invention not being limited to any particular embodiments disclosed, the scope of the invention being defined by the appended claims.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention. Features, elements, and aspects of the invention that are referenced by the same numerals in different figures represent the same, equivalent, or similar features, elements, or aspects in accordance with one or more embodiments.

FIG. 1 illustrates a block diagram of a mobile communication terminal incorporating a method for performing an instant messenger function according to the present invention.

FIGS. 2a to 2c illustrate flowcharts for establishing a messenger object in a method for performing an instant messenger function according to the present invention.

FIGS. 3a and 3b illustrate flowcharts for searching for a messenger object and updating information of the searched messenger object in a method for performing an instant messenger function according to the present invention.

FIGS. 4a and 4b illustrate flowcharts for searching for a messenger object in a method for performing an instant messenger function according to the present invention and for performing an instant messenger function with the searched messenger object.

### DETAILED DESCRIPTION OF THE PREFERRED EMBODIMENTS

The present invention relates to a method and apparatus for performing an instant messenger function. Although the present invention is illustrated with respect to a mobile communication device, it is contemplated that the present invention may be utilized anytime it is desired to perform an instant messenger function.

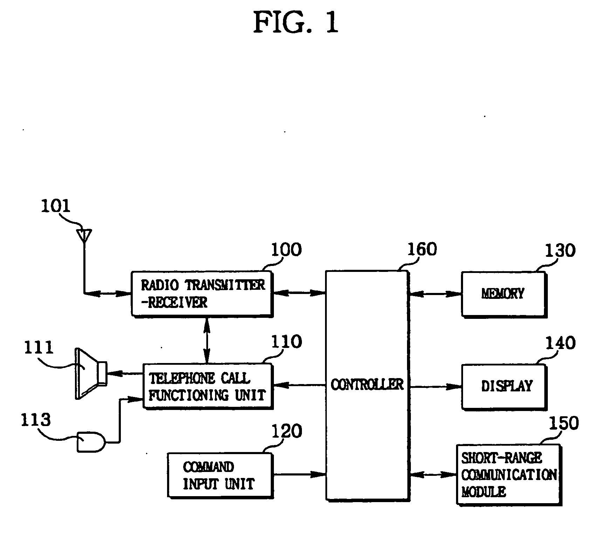

Referring to FIG. 1, a radio transmitter-receiver 100 communicates with a base station (not shown) via an antenna 101 such that a user can exchange voice signals with another user. A telephone call functioning unit 110 outputs the voice signal received by the radio transmitter-receiver 100 to a speaker 111 and transmits the voice signal of the user received through a microphone 113 via the radio transmitter-receiver to thereby allow a user to implement telephone communication.

A command input 120 unit includes a plurality of keys for inputting numerals and text information and function keys for establishing various operational functions of a portable terminal. The command input unit 120 further includes a plurality of function keys to enable the portable terminal to perform short-range communication and simultaneously perform an instant messenger function according to the present invention.

A memory 130 is loaded in advance with programs for controlling general operations of the portable terminal and programs for performing short-range communication between portable terminals according to the present invention. The memory 130 also stores predetermined data generated while the previously stored programs are performed. The memory 130 is further loaded with user information and information related to messenger objects established by a user for implementing the instant messenger function.

A display 140 facilitates display of various data generated while the portable terminal performs telephone communication or short-range communication. A short-range communication module 150 for performing short-range communication includes a bluetooth module, a Zigbee module, an Ultra Wide Band (UWB) module or a radio Local Area Network (LAN) module, thereby allowing the portable terminal to perform mutual short-range communication.

A controller 160 controls the radio transmitter-receiver 100 and the telephone call functioning unit 110 in response to an operation command from the command input unit 120 to enable a user to perform telephone communication. The controller 160 further controls the portable terminal in such a manner that the portable terminal mutually performs short-range communication via the short-range communication module 150 to establish a messenger object, updates the information of the messenger object and performs the instant messenger function.

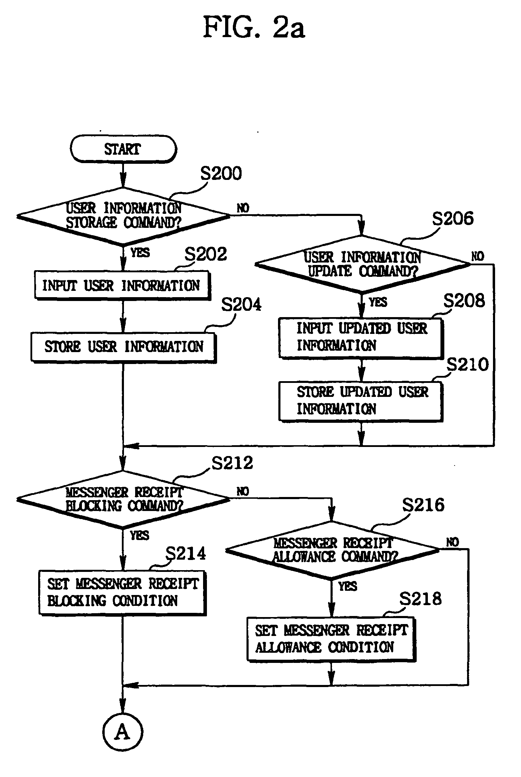

As illustrated in FIGS. 2a to 2c, user information is exchanged between a user and a messenger object when the messenger object is established such that the portable terminal first receives and stores the user information in the memory 130 before the messenger object is established. As illustrated in FIG. 2a, the controller 160 determines whether a command to store user information has been received from the command input unit 120 (S200). The controller 160 inputs the user information via the command input unit 120 if the storage command has been received (S202).

The user information may include, but is not limited to, a user name, a nickname for use when an instant messenger function is performed, a telephone number, an avatar, a user photograph or a present user mood. If the user information has been input, the controller 160 stores the user information in the memory 130 (S204).

If a command to store information has not been received, the controller 160 determines whether a command to update the user information has been received from the command input unit 120 (S206). The controller 160 displays the user information currently stored in the memory 130 on the display 140 if a user information update command has been received, thereby enabling the user to verify that the user information has been input.

The controller 160 inputs the updated user information via the command input unit 120 (S208) and stores the updated user information in the memory 130 after the updated information has been input (S21 0). The user information input by the user may be classified into brief information and detailed information. For example, brief information includes only the user names, nicknames and telephone numbers, while the detailed information includes all the information input by the user.

It should be noted that a user may or may not use an instant messenger function, according to his or her liking. Therefore, it is preferred that a user decides whether to use the instant messenger.

If the user uses the command input unit 120 to request that the messenger function be blocked (S212), the controller 160 establishes a messenger receipt blocking condition and does not implement the instant messenger function (S214). If the user uses the command input unit 120 to request that the messenger function be allowed (S216), the controller 160 establishes a messenger receipt allowance condition and performs the instant messenger function (S218). If the user and the messenger object mutually use the instant messenger function, they exchange information and the exchanged information is stored in the memory 130 such that the user and the messenger mutually establish themselves as messenger objects.

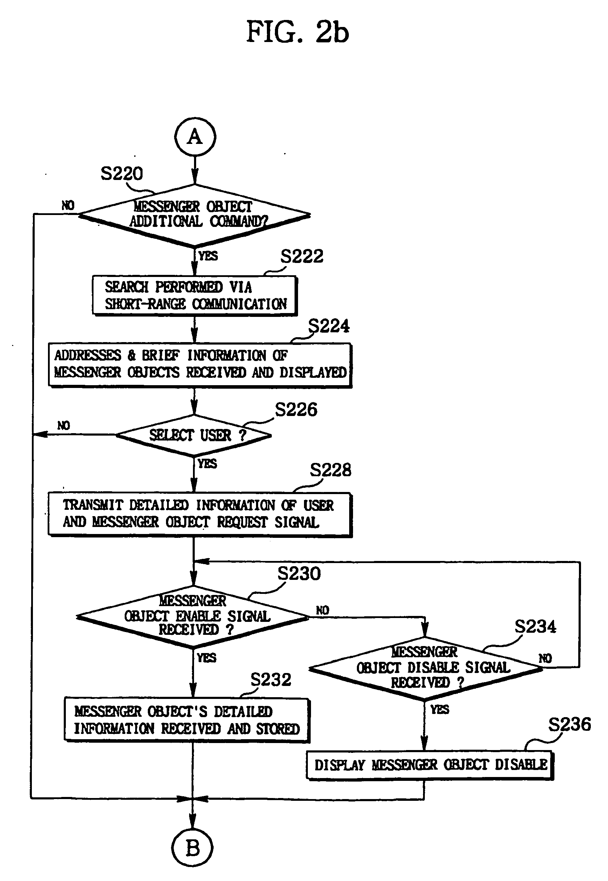

As illustrated in FIG. 2b, the controller 160 determines whether an additional command related to the messenger object for implementing the instant messenger function has been received from the command input unit 120 (S220). As used herein, a portable terminal of the user is a "first portable terminal" and other portable terminals used by messenger objects within the short-range communication area of the first portable terminal are "second portable terminals." Furthermore, as used herein, "controller 160" refers to a controller of the first portable terminal unless otherwise stated.

The controller 160 controls the short-range communication module 150 to search for second portable terminals located within the short-range communication area if an additional messenger object command has been received by the first portable terminal (S222). For example, the controller 160 of the first portable terminal transmits brief information of the user and an information request signal via the short-range communication module 150 to search for second portable terminals located within the short-range communication area.

If the portable terminals are mounted with short-range communication modules, each short-range communication module is provided in advance with an intrinsic address and the provided address is stored in the memory 130. The first portable terminal transmits the address of the short-range communication module 150 when second portable terminal is searched.

If the second portable terminal responds to the search, the second portable terminal transmits the provided address of its short-range communication module and the brief information of the second portable terminal's user to the first portable terminal. The controller 160 receives the address transmitted by the second portable terminal and the brief information of the second portable terminal's user via the short-range communication module 150.

The brief information of the second portable terminal's user is received and displayed on the display 140 to allow the user of the first portable terminal to check the user of the second portable terminal (S224). The user of the first portable terminal checks the brief information of the second portable terminal's user that is displayed on the display 140 and uses the command input unit 120 to select the user of the second portable terminal desired as a messenger object (S226).

Successively, the controller 160 of the first portable terminal transmits the messenger object request signal and the detailed information of the user stored in the memory 130 to a relevant second portable terminal via the short-range communication module 150 (S228). In other words, the detailed information of the user and the messenger object request signal are transmitted to the relevant second portable terminal using the address of the messenger object selected by the user.

Furthermore, the controller 160 determines whether a messenger object enable signal has been received from the second portable terminal (S230). If the enable signal has been received, the controller 160 receives the detailed information of the messenger object transmitted by the second portable terminal and stores the signal and the information in the memory 130 in order to establish the second portable terminal as a messenger object (S232). If the messenger object enable signal is not received and a messenger object disable signal is received (S234), the controller 160 indicates the messenger object disable condition on the display 140 and terminates establishment of the messenger object (S236).

If the first portable terminal is located within the short-range communication area of the second portable terminal and the user of the second portable terminal inputs an additional messenger object command, the second portable terminal transmits an information request signal. The first portable terminal may respond to the second portable terminal in order to allow the user of the first portable terminal and the user of the second portable terminal to mutually establish themselves as messenger objects.

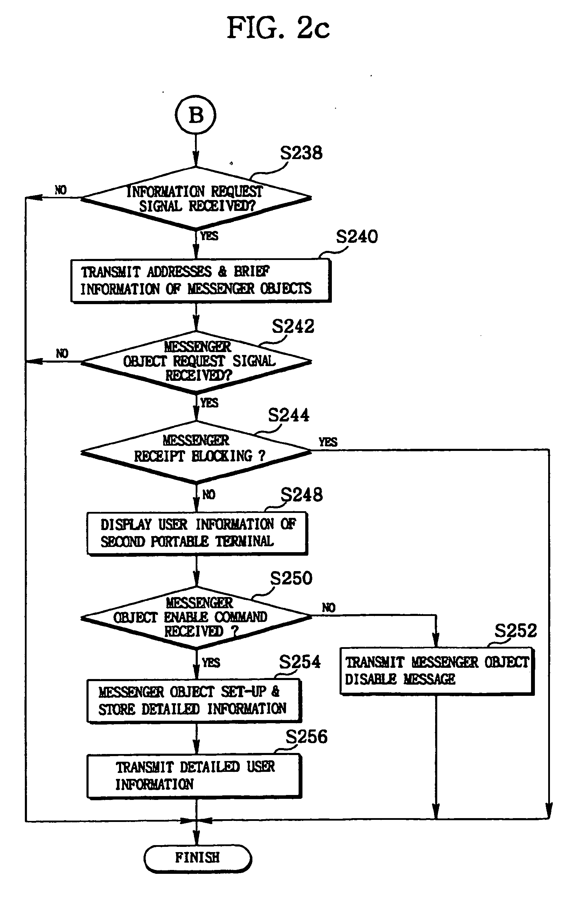

As illustrated in FIG. 2c, the controller 160 determines whether an address and information request signal transmitted by the second portable terminal have been received via the short-range communication module 150 (S238). If an information request signal has been received, the controller 160 transmits the address of the short-range communication module 150 and the brief information stored in the memory 130 to the second portable terminal via the short-range communication module 150 (S240).

The controller 160 then determines whether a signal requesting a messenger object has been received from the second portable terminal (S242). If a messenger object request signal has been received, the controller 160 determines whether messenger receipt blocking is currently established (S244).

If messenger receipt blocking has been established, the controller 160 does not respond to the messenger object request signal from the second portable terminal in order to prevent establishment of mutual messenger objects. If messenger receipt blocking is not established, the controller 160 displays the user information of the second portable terminal on the display 140 (S248).

In other words, if a messenger object request signal is received from the second portable terminal and messenger receipt blocking is not established, the detailed information of the second portable terminal's user is received and the controller 160 displays the detailed information of the second portable terminal's user on the display 140 such that the user of the first portable terminal can check the user of the second portable terminal. The controller 160 then determines whether a messenger object enable command has been received from the command input unit 120 (S250).

If a messenger object enable command has not been received, the controller 160 generates a messenger object disable message and transmits the message to the second portable terminal via the short-range communication module 150 such that mutual messenger objects are not established and terminates the operation (S252). If a messenger object enable command has been received, the controller 160 stores the detailed information of the second portable terminal's user that was received with the messenger object request signal in the memory 130 and establishes the second portable terminal as a messenger object (S254). Furthermore, the controller 160 transmits the detailed information of the user stored in the memory 130 to a relevant second portable terminal via the short-range communication module 150 in order to allow the second portable terminal to establish the first portable terminal as a messenger object (S256).

When implementing an instant messenger function, users of portable terminals may update user information, such as facial expression-changed avatars and photographs, according to their mood conditions. Therefore, it is necessary to update the information of the messenger object stored in the first portable terminal at the same time.

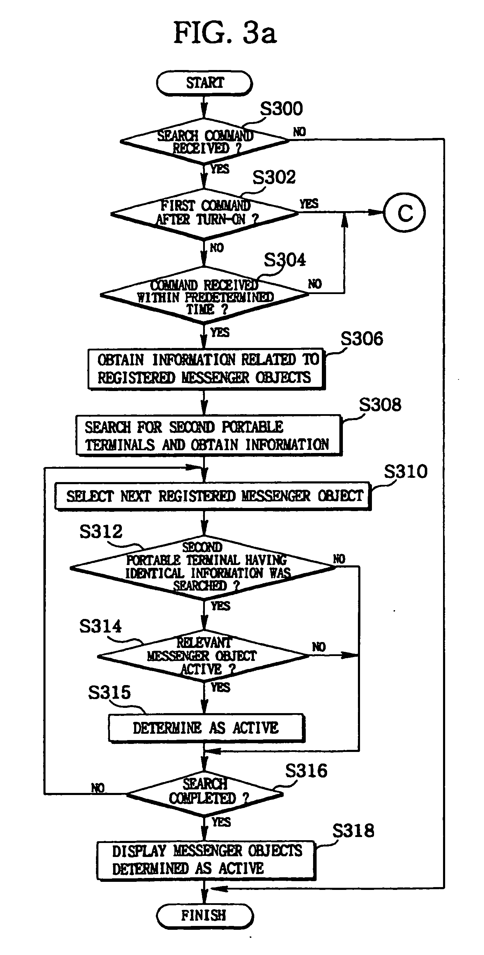

As illustrated in FIG. 3a, the controller 160 determines whether a search command for searching for a messenger object has been received from the command input unit 120 (S300). If a search command has been received, the controller 160 determines whether the search command is a first command following turn-on of the first portable terminal (S302) or is a search command received within a predetermined time after a previous search command was input (S304). For example, the controller 160 determines whether the search command is a first command after turn-on or is a search command re-input within 10 minutes of a previous search command.

If the search command is not the first command after turn-on but is received within the predetermined time after a previous search command, the controller 160 obtains information related to messenger objects registered in the memory 130 (S306). For example, the address of the short-range communication module 150 of second portable terminals of messenger objects is obtained from the memory 130.

The controller 160 successively controls the short-range communication module 150 to search for a plurality of second portable terminals located within the communication area of the short-range communication module and obtains information related to the searched second portable terminals (S308). For example, the address of the short-range communication module 150 of the second portable terminal is obtained.

Upon obtaining the address, the controller 160 selects the messenger objects registered in the memory 130 one-by-one (S310). The information of each selected messenger object and the information of the searched second portable terminals are compared to determine whether the searched second portable terminals have identical information (S312). For example, the controller 160 determines whether a searched second portable terminal has the same address as that of the short-range communication module 150 stored in the memory 130 as a messenger object.

If the second portable terminal having the same information has been searched, the controller 160 determines whether the relevant messenger object is in an active state for implementing short-range communication (S314). For example, the controller 160 determines if the relevant messenger object is located within the communication area of the short-range communication module 150 and, if the relevant messenger object is active, the controller 160 determines the messenger object as active (S315).

If a second portable terminal having the same information has not been searched, the controller 160 determines that the relevant messenger object is not located within the communication area of the short-range communication module 150 and cannot perform the short-range communication. Furthermore, if the relevant messenger object is not active, the controller 160 determines that the messenger object cannot perform the short-range communication.

Next, the controller 160 determines whether searches for all the messenger objects registered in the memory 130 have been completed (S316). If the searches for all the messenger objects have not been completed, the controller 160 selects a next registered messenger object and repeats the process to determine whether the next registered messenger object has information identical to the searched portable terminals and is active.

Upon completing the searches for all messenger objects registered with the memory 130, the controller 160 lists the messenger objects determined as active on the display 140 (S318) and ends the search operation of the messenger objects.

The operation steps (S306-S318) are performed only if a search command for searching for a messenger object is received again within the predetermined time. Therefore, the information of the messenger objects is updated infrequently such that the messenger object is searched and the user is notified only whether the messenger object is in the active state.

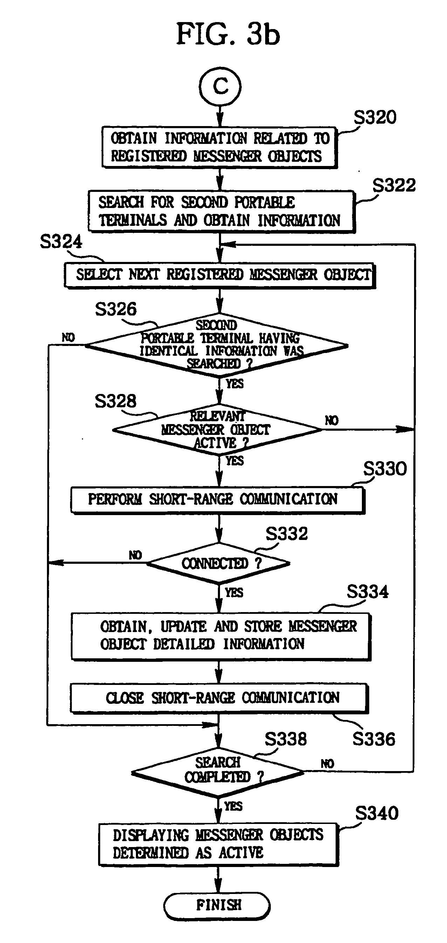

As illustrated in FIG. 3b, the controller 160 obtains information of messenger objects registered in the memory 130 if the received search command is the first command following turn-on of the portable terminal or is received after the predetermined time following a previous search command (S320). The controller 160 then searches a plurality of second portable terminals located within the communication area of the short-range communication module 150 and receives information related to the searched plurality of second portable terminals (S322).

Upon updating the information of the plurality of second portable terminals, the controller 160 selects the messenger objects registered with the memory 130 one-by-one (S324). The information of the selected messenger objects and the information of the searched plurality of second portable terminals are compared to determine whether a second portable terminal having identical information has been searched (S326).

If a second portable terminal having the same information has been searched, the controller 160 determines whether the relevant messenger object is in an active state for implementing the short-range communication (S328). If the relevant messenger object is active, the controller 160 performs a short-range communication with the second portable terminal having the same information as that of the messenger object (S330) and determines whether the first portable terminal has been connected to the second portable terminal via short-range communication (S332). If the relevant messenger object is not active, the controller 160 determines that the messenger object cannot perform the short-range communication.

If the second portable terminal having the same information as that of the messenger object is connected to the first portable terminal via short-range communication, the controller 160 requests and obtains the detailed information of the messenger object from the second portable terminal and the obtained detailed information of the messenger object is updated and stored in the memory 130 (S334). For example, detailed information such as name of the messenger object, title of the conversation, avatar, telephone number or photograph is obtained, updated and stored in the memory 130.

Upon updating the detailed information of the messenger object, the controller 160 closes the short-range communication with the relevant second portable terminal (S336). The controller 160 then determines whether searches for all the registered messenger objects have been completed (S338).

If the searches have not been completed, the controller 160 selects another unsearched messenger object registered with the memory 130, compares the information and determines whether the messenger object has information identical to the searched portable terminals and is active. If another messenger object having identical information to the searched portable terminal is active, the first portable terminal and the second portable terminal of relevant messenger object are connected via short-range communication and the process to update and store the user information of the second portable terminal is repeated. Upon completing the searches for all registered messenger objects, the controller 160 displays the messenger objects that have been determined as active (S340) and ends the search operation of the messenger objects.

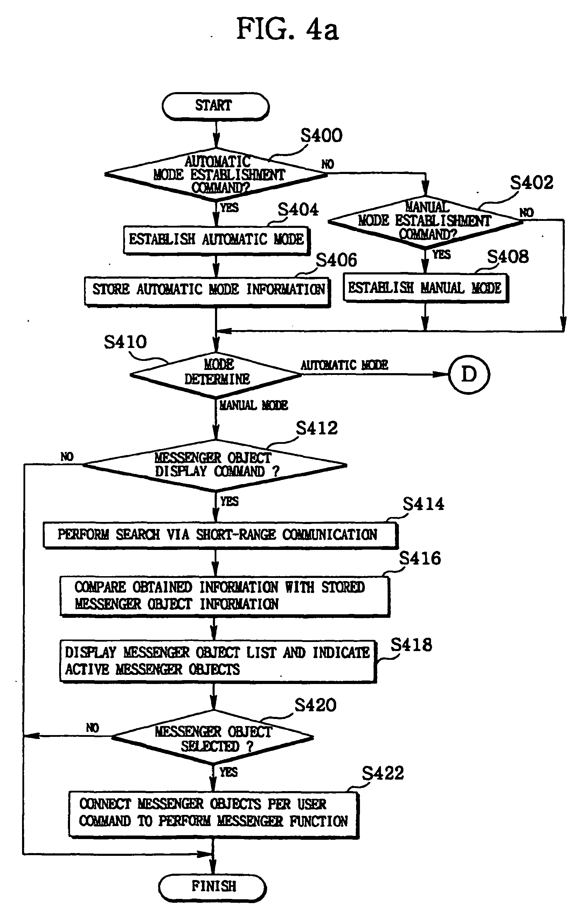

As illustrated in FIG. 4a, the controller 160 determines whether an automatic mode establishment command has been received from the command input unit 120 (S400). The controller 160 also determines whether a manual mode establishment command has been received (S402).

If the automatic mode establishment command has been received, the controller 160 establishes an automatic mode (S404) and stores automatic mode establishment information received from the command input unit 120 (S406). For example, a search time band is established from 9 am to 12 pm in which a messenger object is to be searched in the automatic mode and a search time interval is established at every 10 minutes in which the messenger object is to be searched in the search time band.

If no automatic mode establishment command is received, but a manual mode establishment command is received from the command input unit 120, the controller 160 establishes the manual mode (S408). The controller 160 then determines whether an instant messenger function automatic mode or manual mode was established (S410).

In the manual mode, a messenger object is searched and displayed in response to user command and the instant messenger function is performed. If the manual mode is established, the controller 160 determines whether a messenger object display command has been received from the command input unit 120 (S412). If the messenger object display command was received, the controller 160 searches for a plurality of second portable terminals located in the vicinity of the first portable terminal via short-range communication in order to obtain information related to the second portable terminals (S414). For example, addresses of short-range modules mounted in the second portable terminals are obtained.

If brief information of the users of the second portable terminals is obtained, the controller 160 compares the obtained addresses with those of the messenger objects stored in the memory 130 to determine whether messenger objects have been searched (S416). The controller 160 then displays a messenger object list on the display 140 showing information related to the searched plurality of second portable terminals and indicates as active the messenger objects having the same address as the obtained addresses (S418).

The controller 160 then determines whether the user has selected one of the messenger objects indicated on the display 140 as active via the command input unit 120 (S420). If a messenger object has been selected by the user, the controller 160 controls the short-range communication module 150 to connect the second portable terminal of the messenger object via short-range communication and to perform the instant messenger function (S422). In other words, the second portable terminal corresponding to the messenger object selected by the user is connected via short-range communication and various instant messenger functions are performed, such as chatting, transmission of text messages and game activities.

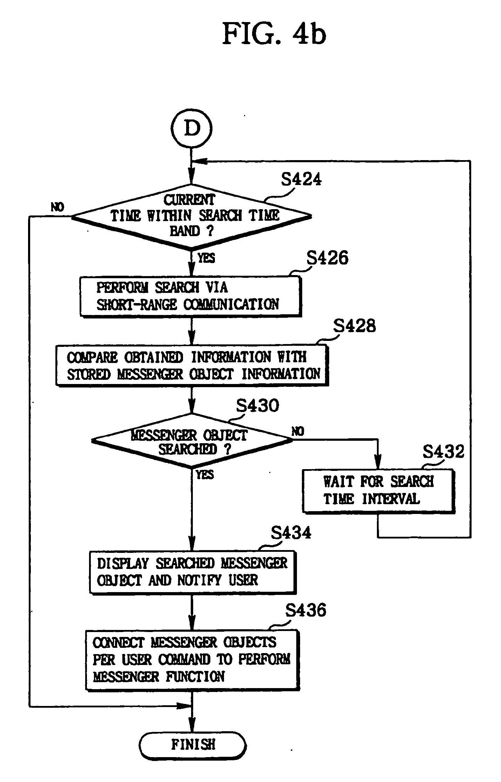

In the automatic mode, messenger objects are searched and displayed at a predetermined interval and the instant messenger function is performed. As illustrated in FIG. 4b, if the automatic mode is established, the controller 160 determines whether the current time is within a search time band established as part of the automatic mode (S424). If the current time is within the search time band, the controller 160 searches for a plurality of second portable terminals located adjacent to the first portable terminal via the short-range communication to obtain addresses of the second portable terminals (S426).

If brief information of the addresses of the second portable terminals is obtained, the controller 160 compares the obtained addresses with those of the messenger objects stored in the memory 130 (S428) to determine whether messenger objects have been searched (S430). If messenger objects have not been searched, the controller 160 waits for a predetermined search time interval (S432) and then again performs the short-range communication if the current time is still within the search time band in order to search for second portable terminals adjacent to the first portable terminal and determine whether messenger objects have been searched.

If messenger objects have been searched, the controller 160 lists the searched messenger objects on the display 140 and notifies the user via a warning sound or a vibration (S434). The controller 160 then controls the short-range communication module 150 in response to a user command to connect the first portable terminal to the second portable terminal of the messenger object and perform the instant messenger function (S436).

According to the present invention, a first portable terminal searches second portable terminals capable of performing an instant messenger function according to a search command. In this way, a user of the first portable terminal can simply check the messenger objects capable of implementing the instant messenger function at a current position. User information updated by the second portable terminals can be easily obtained, updated and stored by the first portable terminal. Furthermore, a user of a portable terminal can easily check if there is a messenger object nearby and can perform chatting, transmission of text messages and game activities when portable terminals having a short-range communication function implement short-range communication to perform the instant messenger function.

The present invention is not limited to the described embodiments. Instead, it will be appreciated by those skilled in the art that various changes may be made to the embodiments without departing from the principles of the invention, the scope of which is defined by the appended claims. As the present invention may be embodied in several forms without departing from the essential characteristics thereof or from the scope as defined by the appended claims, it should also be understood that the above-described embodiments are not limited by any of the details of the foregoing description, unless otherwise specified, but rather should be construed broadly within its scope as defined in the appended claims.

The foregoing embodiments and advantages are merely exemplary and are not to be construed as limiting the present invention. The description of the present invention is intended to be illustrative.

## Claims

1. A method for performing an instant messenger function in a first portable terminal comprising a memory (130) for storing user information and information related to messenger objects and a short-range communication module (120) for performing short-range communication, the method comprising:
storing (S204) user information related to the instant messenger function in the first portable terminal;
searching (S222) by sending an information request signal via a wireless short-range communication, for at least one second portable terminal located within a wireless short-range communication area of the short-range communication module of the first portable terminal and enabled to perform an instant messenger function,
the step of searching further comprising:
obtaining the address of a short-range communication module of each of the at least one second portable terminal;
determining (S416, S428) whether each of said searched at least one second portable terminals has the same address as that of one of the short-range communication modules registered as a messenger object in the memory of the first portable terminal,
whereby the at least one second portable terminal is enabled to perform an instant messenger function if said at least one second portable terminal has been registered with user information of a messenger object in the first portable terminal;
exchanging (S224, S228, S232) via the wireless short-range communication, user information related to the instant messaging function with the searched at least one second portable terminal;
and initiating (S422, S436) based on the messenger object, a connection via the wireless short-range communication with the searched at least one second portable terminal to implement the instant messenger function.

2. The method of claim 1, wherein the user information comprises at least one of a user name, a nickname, a telephone number, an avatar, a user photograph and a present mood of the user.

3. The method of claim 1, wherein the searching, exchanging
and initiating steps are performed via wireless short-range communication comprising one of Bluetooth, Zigbee, UWB (Ultra Wide Band) and radio LAN (Local Area Network).

4. The method of claim 1, further comprising searching (S220) for the at least one second portable terminal when an additional messenger object command is received via a command input unit (120) from a user of the first portable terminal.

5. The method of claim 1, wherein searching for the at least one second portable terminal comprises:
transmitting (S222, S228) user information to the at least one second portable terminal;
receiving (S224, S232) user information from the at least one second portable terminal; and
displaying (S232) the received user information.

6. The method of claim 1, wherein the method further comprises:
transmitting (S228) the user information and a messenger object request signal to a portable terminal selected by a user from the searched at least one second portable terminal;
receiving (S230, S232) user information and a messenger object enable signal from the selected at least one second portable terminal in response to the messenger object request signal;
storing (S232) the received user information in response to the messenger object enable signal; and
setting up (S422, S436) the selected at least one second portable terminal as the messenger object.

7. The method of claim 1, wherein implementing the instant messenger function comprises:
searching (S412) for the at least one second portable terminal in response to a messenger object display command via the command input unit;
obtaining (S414) information related to the searched at least one second portable terminal;
comparing (S416) the obtained information to information related to the established messenger object in order to detect the at least one second portable terminal established as the messenger object;
displaying (S418) at least one active messenger object; and
implementing (S422) the instant messenger function with the at least one second portable terminal of the at least one active messenger object.

8. The method of claim 1, wherein implementing the instant messenger function comprises:
determining (S400, S404) that an automatic mode is established;
searching (S426) for the at least one second portable terminal according to a predetermined search time interval;
obtaining (S426) information related to the at least one second portable terminal;
comparing (S428) the obtained information to information related to the established messenger object in order to detect the at least one second portable terminal established as the messenger object;
notifying (S434) a user that the at least one portable terminal of the messenger object have been detected; and
implementing (S436) the instant messenger function with the at least one second portable terminal of the messenger object.

9. The method of claim 8, wherein searching for the at least one second portable terminal comprises searching (S424) within a predetermined search time band.

10. The method of claim 8, wherein notifying (S434) the user comprises displaying the at least one second portable terminal as active and generating at least one of a vibration and a warning sound.

11. The method of claim 1, further comprising:
searching (S322) for the at least one second portable terminal with which the instant messenger function was implemented;
obtaining (S322) user information from the searched at least one second portable terminal; and
updating (S334) the user information of the searched at least one second portable terminal.

12. The method of claim 11, wherein updating the user information of the at least one second portable terminal comprises:
searching for the at least one second portable terminal with which the instant messenger function was implemented in response to a search command received (S300) via the command input unit to obtain information; and
comparing (S326) the obtained information to information related to the established messenger object in order to detect the at least one second portable terminal established as the messenger object.

13. The method of claim 12, wherein searching for the at least one second portable terminal with which the instant messenger function was implemented comprises determining (S302, S304) that the search command via the command input unit was either a first command received after the portable terminal was turned on or was received at least a predetermined time after a previous search command was received.

14. A method for performing an instant messenger function among a first and a second portable terminal,
the first portable terminal comprising a short-range communication module for performing short-range communication and
the second portable terminal comprising a memory (130) for storing user information and information related to messenger objects and short-range communication module (150) for performing short-range communication,
the method comprising:
storing (S204) user information related to the instant messenger function in the second portable terminal;
receiving (S238) in the first portable terminal, an information request signal via a wireless short-range communication from the second portable terminal located within a wireless short-range communication area, the information request signal being for searching, by the second portable terminal, for at least another portable terminal located within a wireless short-range communication area of the short-range communication module of the second portable terminal and enabled to perform an instant messenger function;
providing the address of the short-range communication module of the first portable terminal to the second portable terminal;
determining (S416, S428) at the second portable terminal, whether the first portable terminal has the same address as that of one of the short-range communication modules registered as a messenger object in the memory of the second portable terminal, whereby the at least another portable terminal is enabled to perform an instant messenger function if said at least another portable terminal has been registered with user information of a messenger object in the second portable terminal;
exchanging (S240, S242, S250) via the wireless short-range communication, user information related to the instant messaging function among the first and the second portable terminal;
and initiating first based on the first (S422, S436) portable terminal having been established as a messenger object, a connection via wireless short-range communication with the first portable terminal to implement the instant messenger function.

15. The method of claim 14, further comprising:
a user of the first portable terminal establishing (S244) one of a messenger receipt blocking condition and a messenger receipt allowance condition; and
remaining unresponsive to the received information request signal if the messenger receipt blocking condition is established such that user information is not exchanged and the second portable terminal is not established as a messenger object.

16. The method of claim 14, further comprising:
- determining (S250) whether a user of the second portable terminal has indicated that the first portable terminal should be established as a messenger object; and not establishing the first portable terminal as a messenger object if the user has not indicated that the first portable terminal should be established as a messenger object.

17. A portable terminal for performing an instant messenger function, the portable terminal comprising:
a memory unit (130) adapted to store user information;
a wireless short-range communication unit (150) adapted to perform wireless short-range communication;
a command input unit (120) adapted to allow a user to enter information;
a display unit (140) adapted to display information; and
a controller (160) adapted
to control the memory unit (130) the wireless short-range communication unit, the command input unit (120) and the display unit (140)
to search (S222) for at least another portable terminal located within a wireless short-range communication area of the short-range communication module of said portable terminal and enabled to perform an instant messenger function , the search being performed by sending an information request signal via a wireless short-range communication, and by obtaining the address of each short-range communication module of each of said at least another portable terminal,
and wherein the controller, upon obtaining the address of a short-range communication module of at least one other portable terminal, is further adapted to
determine (S416, S428) whether each of said searched at least another portable terminal has the same address as that of one of the short- range communication modules registered as a messenger object in the memory of said portable terminal, whereby said at least another portable terminal is enabled to perform an instant messenger function if said at least another portable terminal has been registered with user information of a messenger object in said portable terminal.
the controller being further adapted
to exchange (S224, S228, S232), via the wireless short-range communication, user information related to the instant messaging function with the searched at least one other portable terminal,
and to initiate (S422, S436) based on the messenger object, a connection via the wireless short-range communication with the searched at least one other portable terminal to implement the instant messenger function.

18. The portable terminal of claim 17, wherein the memory unit (130) is further adapted to store user information comprising at least one of a user name, a nickname, a telephone number, an avatar, a user photograph and a present mood of the user.

19. The portable terminal of claim 17, wherein the short-range communication unit (150) comprises one of a Bluetooth module, a Zigbee module, a UWB (Ultra Wide Band) module and a radio LAN (Local Area Network) module.

20. The portable terminal of claim 17, wherein the controller (160) is further adapted to search (S220) for the at least one other portable terminal when an additional messenger object command is received via the command input unit (120).

21. The portable terminal of claim 17, wherein the controller (160) is further adapted to search for the at least one other portable terminal by:
transmitting (S222, S228) user information to the at least one other portable terminal via the short-range communication unit (150);
receiving (S224, S232) user information from the at least one other portable terminal via the short-range communication unit (150); and
displaying (S232) the received user information on the display unit (140).

22. The portable terminal of claim 17, wherein the controller (160) is further adapted to establish the messenger object by:
transmitting (S228) the user information and a messenger object request signal via the short-range communication unit (150) to a portable terminal selected by the user from the searched at least one other portable terminal;
receiving (S230, S232) user information and a messenger object enable signal via the short-range communication unit (150) from the selected at least one other portable terminal in response to the messenger object request signal;
storing (S232) the received user information in the memory unit (130) in response to the messenger object enable signal; and
setting up (S422, S436) the selected at least one other portable terminal as the messenger object.

23. The portable terminal of claim 17, wherein the controller (160) is further adapted to implement the instant messenger function by:
searching (S412) for the at least one other portable terminal in response to a messenger object display command received via the command input unit;
obtaining (S414) information related to the searched at least one other portable terminal;
comparing (S416) the obtained information to information related to the established messenger object in order to detect the at least one other portable terminal established as the messenger object;
displaying (S418) at least one active messenger object on the display unit (140); and
implementing (S422) the instant messenger function with the at least one other portable terminal of the at least one active messenger object.

24. The portable terminal of claim 17, wherein the controller (160) is further adapted to implement the instant messenger function by:
determining that an automatic mode is established;
searching for the at least one other portable terminal according to a predetermined search time interval;
obtaining information related to the at least one other portable terminal;
comparing the obtained information to information related to the established messenger object in order to detect the at least one other portable terminal established as the messenger object;
notifying a user that the at least one portable terminal of the messenger object has been detected; and
implementing the instant messenger function with the at least one other portable terminal of the messenger object.

25. The portable terminal of claim 24, wherein the controller (160) is further adapted to search for the at least one other portable terminal within a predetermined search time band.

26. The portable terminal of claim 24, wherein the controller (160) is further adapted to notify the user by:
displaying the at least one other portable terminal as active on the display unit (140); and
generating at least one of a vibration and a warning sound.

27. The portable terminal of claim 17, wherein the controller (160) is further adapted to:
receive an information request signal via a wireless short-range communication from an other portable terminal located within a wireless short-range communication area and in response thereto, providing the address of the short-range communication module (150) to said other portable terminal;
exchange, via the wireless short-range communication, user information related to the instant messaging function with the other portable terminal;
initiate, based on the messenger object, a connection via wireless short-range communication with the other portable terminal to implement the instant messenger function.

28. The portable terminal of claim 27, wherein the controller is further adapted to:
determine that a user of said portable terminal has established one of a messenger receipt blocking condition and a messenger receipt allowance condition; and
remain unresponsive to the received information request signal if the messenger receipt blocking condition is established such that user information is not exchanged and the other portable terminal is not established as a messenger object.

29. The portable terminal of claim 27, wherein the controller is further adapted to:
determine whether a user of said portable terminal has indicated that the other portable terminal should be established as messenger object; and
not establish the other portable terminal as a messenger object if the user has not indicated that the other portable terminal should be established as a messenger object.

30. The portable terminal of claim 17, wherein the controller is further adapted to:
search for the at least one other portable terminal with which the instant messenger function was implemented;
obtain user information from the searched at least one other portable terminal; and
update the user information of the searched at least one other portable terminal stored in the memory unit (130).

31. The portable terminal of claim 30, wherein the controller is further adapted to update the user information of the at least one other portable terminal by:
searching for the at least one other portable terminal with which the instant messenger function was implemented in response to receiving (S300) a search command via the command input unit (120) to obtain information; and
comparing (S326) the obtained information to information stored in the memory unit (130) that is related to the established messenger object in order to detect the at least one other portable terminal established as the messenger object.

32. The portable terminal of claim 31, wherein the controller (160) is further adapted to search for the at least one second portable terminal with which the instant messenger function was implemented by determining (S302, S304) that the search command was either a first command received after said portable terminal was turned on or was received at least a predetermined time after a previous search command was received.

## Patentansprüche

1. Verfahren zum Durchführen einer Sofortnachrichtenfunktion in einem ersten tragbaren Endgerät, welches einen Speicher (130) zum Speichern von Nutzerinformationen sowie von Informationen, die sich auf Nachrichtenobjekte beziehen, sowie ein Kurzbereichs-Kommunikationsmodul (120) zur Durchführung von Kurzbereichskommunikationen umfasst, wobei das Verfahren umfasst:
- Speichern (S204) von Nutzerinformationen, die sich auf die Sofortnachrichtenfunktion beziehen, in dem ersten tragbaren Endgerät,
- Suchen (S222), durch Aussenden eines Informationsanforderungssignals über eine drahtlose Kurzbereichskommunikation, nach mindestens einem zweiten tragbaren Endgerät, das sich in einem Drahtlos-Kurzbereichs-Kommunikationsgebiet des Kurzbereichs-Kommunikationsmoduls des ersten tragbaren Endgeräts befindet und zur Durchführung einer Sofortnachrichtenfunktion freigegeben ist,
wobei der Schritt des Suchens ferner umfasst:
- Erhalten der Adresse eines Kurzbereichs-Kommunikationsmoduls jedes des mindestens einen zweiten tragbaren Endgeräts,
- Feststellen für jedes des gesuchten mindestens einen zweiten tragbaren Endgeräts, ob es die gleiche Adresse wie eines der im Speicher des ersten tragbaren Endgeräts als Nachrichtenobjekt registrierten Kurzbereichs-Kommunikationsmodule besitzt,
wobei das mindestens eine zweite tragbare Endgerät dazu freigegeben ist, eine Sofortnachrichtenfunktion auszuführen, wenn das mindestens eine zweite tragbare Endgerät mit Nutzerinformationen eines Nachrichtenobjekts in dem ersten tragbaren Endgerät registriert wurde,
- Austauschen (S224, 5228, S232) von Nutzerinformationen, die sich auf die Sofortnachrichtenfunktion beziehen, mit dem gesuchten mindestens einen zweiten tragbaren Endgerät über die drahtlose Kurzbereichskommunikation,
- und Initiieren (S422, S436) einer Verbindung mit dem gesuchten mindestens einen zweiten tragbaren Endgerät über die drahtlose Kurzbereichskommunikation auf Grundlage des Nachrichtenobjekts, um die Sofortnachrichtenfunktion zu implementieren.

2. Verfahren nach Anspruch 1, wobei die Nutzerinformationen mindestens eines der folgenden umfassen: einen Nutzernamen, einen Spitznamen, eine Telefonnummer, einen Avatar, ein Nutzerphoto und eine derzeitige Stimmung des Nutzers.

3. Verfahren nach Anspruch 1, wobei die Schritte des Suchens, Austauschens und Initiierens über eine drahtlose Kurzbereichskommunikation durchgeführt werden, welche Bluetooth, Zigbee, UWB (Ultrabreitband) und ein Funk-LAN (Lokales Netzwerk) umfasst.

4. Verfahren nach Anspruch 1, ferner umfassend ein Suchen (S220) nach dem mindestens einen zweiten tragbaren Endgerät, wenn von einem Nutzer des ersten tragbaren Endgeräts über eine Befehlseingabeeinheit (120) ein zusätzlicher Nachrichtenobjektbefehl erhalten wird.

5. Verfahren nach Anspruch 1, wobei das Suchen nach dem mindestens einen zweiten tragbaren Endgerät umfasst:
- Übermitteln (S222, S228) von Nutzerinformationen an das mindestens eine zweite tragbare Endgerät,
- Empfangen (S224, S232) von Nutzerinformationen von dem mindestens einen zweiten tragbaren Endgerät und
- Anzeigen (S232) der empfangenen Nutzerinformationen.

6. Verfahren nach Anspruch 1, wobei das Verfahren ferner umfasst:
- Übermitteln (S228) der Nutzerinformationen und eines Nachrichtenobjekt-Anforderungssignals an ein von einem Nutzer aus dem gesuchten mindestens einen zweiten tragbaren Endgerät ausgewähltes tragbares Endgerät,
- Empfangen (S230, S232) von Nutzerinformationen und eines Nachrichtenobjekt-Freigabesignals von dem gewählten mindestens einen zweiten tragbaren Endgerät in Antwort auf das NachrichtenobjektAnforderungssignal,
- Speichern (S232) der empfangenen Nutzerinformationen in Antwort auf das Nachrichtenobjekt-Freigabesignal und
- Einrichten (S422, S436) des gewählten mindestens einen zweiten tragbaren Endgeräts als das Nachrichtenobjekt.

7. Verfahren nach Anspruch 1, wobei das Implementieren der Sofortnachrichtenfunktion umfasst:
- Suchen (S412) nach dem mindestens einen zweiten tragbaren Endgerät in Antwort auf einen Nachrichtenobjekt-Anzeigebefehl über die Befehlseingabeeinheit,
- Erhalten (S414) von Informationen bezüglich des gesuchten mindestens einen zweiten tragbaren Endgeräts,
- Vergleichen (S416) der erhaltenen Informationen mit Informationen bezüglich des eingerichteten Nachrichtenobjekts, um das als das Nachrichtenobjekt eingerichtete mindestens eine zweite tragbare Endgerät zu erkennen,
- Anzeigen (S418) mindestens eines aktiven Nachrichtenobjekts und
- Implementieren (S422) der Sofortnachrichtenfunktion mit dem mindestens einen zweiten tragbaren Endgerät des mindestens einen aktiven Nachrichtenobjekts.

8. Verfahren nach Anspruch 1, wobei das Implementieren der Sofortnachrichtenfunktion umfasst:
- Feststellen (S400, S404), dass ein automatischer Modus eingerichtet ist,
- Suchen (S426) nach dem mindestens einen zweiten tragbaren Endgerät gemäß einem vorbestimmten Suchzeitintervall,
- Erhalten (S426) von Informationen bezüglich des mindestens einen zweiten tragbaren Endgeräts,
- Vergleichen (S428) der erhaltenen Informationen mit Informationen betreffend das eingerichtete Nachrichtenobjekt, um das als das Nachrichtenobjekt eingerichtete mindestens eine zweite tragbare Endgerät zu erkennen,
- Benachrichtigen (S434) eines Nutzers, dass das mindestens eine tragbare Endgerät des Nachrichtenobjekts erkannt wurde, und
- Implementieren (S436) der Sofortnachrichtenfunktion mit dem mindestens einen zweiten tragbaren Endgerät des Nachrichtenobjekts.

9. Verfahren nach Anspruch 8, wobei das Suchen nach dem mindestens einen zweiten tragbaren Endgerät ein Suchen (S424) innerhalb eines vorbestimmten Suchzeitbereichs umfasst.

10. Verfahren nach Anspruch 8, wobei das Benachrichtigen (S434) des Nutzers ein Anzeigen des mindestens einen zweiten tragbaren Endgeräts als aktiv und ein Erzeugen einer Vibration oder/und eines Warntons umfasst.

11. Verfahren nach Anspruch 1, ferner umfassend:
- Suchen (S322) nach dem mindestens einen zweiten tragbaren Endgerät, mit dem die Sofortnachrichtenfunktion implementiert wurde,
- Erhalten (S322) von Nutzerinformationen von dem gesuchten mindestens einen zweiten tragbaren Endgerät und
- Aktualisieren (S334) der Nutzerinformationen des gesuchten mindestens einen zweiten tragbaren Endgeräts.

12. Verfahren nach Anspruch 11, wobei das Aktualisieren der Nutzerinformationen des mindestens einen zweiten tragbaren Endgeräts umfasst:
- Suchen nach dem mindestens einen zweiten tragbaren Endgerät, mit dem die Sofortnachrichtenfunktion implementiert wurde, in Antwort auf einen über die Befehlseingabeeinheit empfangenen (S300) Suchbefehl, um Informationen zu erhalten, und
- Vergleichen (S326) der erhaltenen Informationen mit Informationen betreffend das eingerichtete Nachrichtenobjekt, um das mindestens eine als Nachrichtenobjekt eingerichtete zweite tragbare Endgerät zu erkennen.

13. Verfahren nach Anspruch 12, wobei das Suchen nach dem mindestens einen zweiten tragbaren Endgerät, mit dem die Sofortnachrichtenfunktion implementiert wurde, ein Feststellen (S302, S304) umfasst, dass der Suchbefehl über die Befehlseingabeeinheit ein erster Befehl war, der empfangen wurde, nachdem das tragbare Endgerät eingeschaltet wurde, oder der zumindest eine vorbestimmte Zeit nach dem Empfang eines vorherigen Suchbefehls empfangen wurde.

14. Verfahren zur Durchführung einer Sofortnachrichtenfunktion zwischen einem ersten und einem zweiten tragbaren Endgerät, wobei das erste tragbare Endgerät ein Kurzbereichs-Kommunikationsmodul zur Durchführung einer Kurzbereichs-Kommunikation umfasst und das zweite tragbare Endgerät einen Speicher (130) zum Speichern von Nutzerinformationen und von Informationen bezüglich Nachrichtenobjekten sowie ein Kurzbereichs-Kommunikationsmodul (150) zur Durchführung einer Kurzbereichs-Kommunikation umfasst,
wobei das Verfahren umfasst:
- Speichern (S204) von Nutzerinformationen bezüglich der Sofortnachrichtenfunktion in dem zweiten tragbaren Endgerät,
- Empfangen (S238) eines Informationsanforderungssignals über eine drahtlose Kurzbereichs-Kommunikation von dem zweiten tragbaren Endgerät, das sich in einem Drahtlos-Kurzbereichs-Kommunikationsgebiet befindet, in dem ersten tragbaren Endgerät, wobei das Informationsanforderungssignal dazu dient, dass das zweite tragbare Endgerät nach mindestens einem weiteren tragbaren Endgerät sucht, das sich in einem Drahtlos-Kurzbereichs-Kommunikationsgebiet des Kurzbereichs-Kommunikationsmoduls des zweiten tragbaren Endgeräts befindet und zur Durchführung einer Sofortnachrichtenfunktion freigegeben ist,
- Bereitstellen der Adresse des Kurzbereichs-Kommunikationsmoduls des ersten tragbaren Endgeräts an das zweite tragbare Endgerät,
- Ermitteln (S426, S428) an dem zweiten tragbaren Endgerät, ob das erste tragbare Endgerät die gleiche Adresse wie eines der als Nachrichtenobjekt im Speicher des zweiten tragbaren Endgeräts registrierten Kurzbereichs-Kommunikationsmodule hat, wobei das mindestes eine weitere tragbare Endgerät zur Durchführung einer Sofortnachrichtenfunktion freigegeben ist, wenn das mindestens eine weitere tragbare Endgerät zusammen mit Nutzerinformationen eines Nachrichtenobjekts in dem zweiten tragbaren Endgerät registriert wurde,
- Austauschen (S240, S242, S250) von Nutzerinformationen bezüglich der Sofortnachrichtenfunktion zwischen dem ersten und dem zweiten tragbaren Endgerät über die Drahtlos-Kurzbereichs-Kommunikation,
- und Initiieren (S422, S436) einer Verbindung über eine Drahtlos-Kurzbereichs-Kommunikation mit dem ersten tragbaren Endgerät auf Grundlage dessen, dass das erste tragbare Endgerät als ein Nachrichtenobjekt eingerichtet wurde, um die Sofortnachrichtenfunktion zu implementieren.

15. Verfahren nach Anspruch 14, ferner umfassend:
- das Einrichten (S244) einer Bedingung zur Blockierung eines Nachrichtenempfangs oder einer Bedingung zur Genehmigung eines Nachrichtenempfangs durch einen Nutzer des ersten tragbaren Endgeräts, und
- das Verharren ohne Reaktion auf das empfangene Informationsanforderungssignal, falls die Bedingung zur Nachrichtenempfangsblockierung eingerichtet ist, derart, dass keine Nutzerinformationen ausgetauscht werden und das zweite tragbare Endgerät nicht als Nachrichtenobjekt eingerichtet wird.

16. Verfahren nach Anspruch 14, ferner umfassend:
- Ermitteln (S250), ob ein Nutzer des zweiten tragbaren Endgeräts angegeben hat, dass das erste tragbare Endgerät als Nachrichtenobjekt eingerichtet werden soll, und
- Nichteinrichten des ersten tragbaren Endgeräts als Nachrichtenobjekt, falls der Nutzer nicht angegeben hat, dass das erste tragbare Endgerät als Nachrichtenobjekt eingerichtet werden soll.

17. Tragbares Endgerät zur Durchführung einer Sofortnachrichtenfunktion, wobei das tragbare Endgerät umfasst:
- eine zur Speicherung von Nutzerinformationen eingerichtete Speichereinheit (130),
- eine zur Durchführung von drahtlosen Kurzbereichskommunikationen eingerichtete Drahtlos-Kurzbereichs-Kommunikationseinheit (150),
- eine Befehlseingabeeinheit (120), welche dazu eingerichtet ist, einem Nutzer die Eingabe von Informationen zu ermöglichen,
- eine zur Anzeige von Informationen eingerichtete Anzeigeeinheit (140),
- eine Steuereinheit (160), welche dazu eingerichtet ist, die Speichereinheit (130), die Drahtlos-Kurzbereichs-Kommunikationseinheit, die Befehlseingabeeinheit (120) und die Anzeigeeinheit (140) dazu zu steuern, nach mindestens einem weiteren tragbaren Endgerät zu suchen, das sich in einem Drahtlos-Kurzbereichs-Kommunikationsgebiet des Kurzbereichs-Kommunikationsmoduls des tragbaren Endgeräts befindet und zur Durchführung einer Sofortnachrichtenfunktion freigegeben ist, wobei die Suche durchgeführt wird, indem ein Informationsanforderungssignal über eine drahtlose Kurzbereichskommunikation ausgesendet wird und die Adresse jedes Kurzbereichs-Kommunikationsmoduls von jedem des mindestens einen weiteren tragbaren Endgeräts erhalten wird,
und wobei die Steuereinheit nach Erhalt der Adresse eines Kurzbereichs-Kommunikationsmoduls mindestens eines weiteren tragbaren Endgeräts ferner dazu eingerichtet ist festzustellen (S426, S428), ob jedes des gesuchten mindestens eines weiteren tragbaren Endgeräts die gleiche Adresse wie eines der im Speicher des tragbaren Endgeräts als Nachrichtenobjekt registrierten Kurzbereichs-Kommunikationsmodule hat, wobei das mindestens eine weitere tragbare Endgerät zur Durchführung einer Sofortnachrichtenfunktion freigegeben ist, falls das mindestens eine weitere tragbare Endgerät zusammen mit Nutzerinformationen eines Nachrichtenobjekts in dem tragbaren Endgerät registriert wurde,
- wobei die Steuereinheit ferner dazu eingerichtet ist, über eine drahtlose Kurzbereichs-Kommunikation Nutzerinformationen bezüglich der Sofortnachrichtenfunktion mit dem gesuchten mindestens einen weiteren tragbaren Endgerät auszutauschen (S224, S228, S232) und auf Grundlage des Nachrichtenobjekts eine Verbindung über eine drahtlose Kurzbereichs-Kommunikation mit dem gesuchten mindestens einen weiteren tragbaren Endgerät zu initiieren (5422, S436), um die Sofortnachrichtenfunktion zu implementieren.

18. Tragbares Endgerät nach Anspruch 17, wobei die Speichereinheit (130) ferner dazu eingerichtet ist, Nutzerinformationen zu speichern, welche mindestens eines der Folgenden umfassen: einen Nutzernamen, einen Spitznamen, eine Telefonnummer, einen Avatar, ein Nutzerphoto und eine momentane Stimmung des Nutzers.

19. Tragbares Endgerät nach Anspruch 17, wobei die Kurzbereichs-Kommunikationseinheit (150) ein Bluetooth-Modul, ein Zigbee-Modul, ein UWB- (Ultrabreitband) Modul oder ein Funk-LAN (Lokales Netzwerk) Modul umfasst.

20. Tragbares Endgerät nach Anspruch 17, wobei die Steuereinrichtung (160) ferner dazu eingerichtet ist, nach dem mindestens einen weiteren tragbaren Endgerät zu suchen (S220), wenn über die Befehlseingabeeinheit (120) ein zusätzlicher Nachrichtenobjektbefehl empfangen wird.

21. Tragbares Endgerät nach Anspruch 17, wobei die Steuereinheit (160) ferner dazu eingerichtet ist, nach dem mindestens einen weiteren tragbaren Endgerät zu suchen durch:
- Übermitteln (S222, S228) von Nutzerinformationen an das mindestens eine weitere tragbare Endgerät über die Kurzbereichs-Kommunikationseinheit (150),
- Empfangen (S224, S232) von Nutzerinformationen von dem mindestens einen weiteren tragbaren Endgerät über die Kurzbereichs-Kommunikationseinheit (150) und
- Anzeigen (S232) der empfangenen Nutzerinformationen auf der Anzeigeeinheit (140).

22. Tragbares Endgerät nach Anspruch 17, wobei die Steuereinheit (160) ferner dazu eingerichtet ist, das Nachrichtenobjekt einzurichten durch:
- Übermitteln (S228) der Nutzerinformationen und eines Nachrichtenobjektanforderungssignals über die Kurzbereichs-Kommunikationseinheit (150) an ein vom Nutzer aus dem gesuchten mindestens einen weiteren tragbaren Endgerät gewähltes tragbares Endgerät,
- Empfangen (S230, S232) von Nutzerinformationen und eines Nachrichtenobjektfreigabesignals über die Kurzbereichs-Kommunikationseinheit (150) von dem gewählten mindestens einen weiteren tragbaren Endgerät in Antwort auf das Nachrichtenobjektanforderungssignal,
- Speichern (S232) der empfangenen Nutzerinformationen in der Speichereinheit (130) in Antwort auf das Nachrichtenobjektfreigabesignal und
- Einrichten (S422, S436) als Nachrichtenobjekt.

23. Tragbares Endgerät nach Anspruch 17, wobei die Steuereinheit (160) ferner dazu eingerichtet ist, die Sofortnachrichtenfunktion zu implementieren durch:
- Suchen (S412) nach dem mindestens einen weiteren tragbaren Endgerät in Antwort auf einen über die Befehlseingabeeinheit empfangenen Nachrichtenobjektanzeigebefehl,
- Erhalten (S414) von Informationen bezüglich des gesuchten mindestens einen weiteren tragbaren Endgeräts,
- Vergleichen (S416) der erhaltenen Informationen mit Informationen bezüglich des eingerichteten Nachrichtenobjekts, um das mindestens eine, als Nachrichtenobjekt etablierte weitere tragbare Endgerät zu erkennen,
- Anzeigen (S418) mindestens eines aktiven Nachrichtenobjekts auf der Anzeigeeinheit (140) und
- Implementieren (S422) der Sofortnachrichtenfunktion mit dem mindestens einen weiteren tragbaren Endgerät des mindestens einen aktiven Nachrichtenobjekts.

24. Tragbares Endgerät nach Anspruch 17, wobei die Steuereinheit (160) ferner dazu eingerichtet ist, die Sofortnachrichtenfunktion zu implementieren durch:
- Feststellen, dass ein automatischer Modus eingerichtet ist,
- Suchen nach dem mindestens einen weiteren tragbaren Endgerät gemäß einem vorbestimmten Suchzeitintervall,
- Erhalten von Informationen bezüglich des mindestens einen weiteren tragbaren Endgeräts,
- Vergleichen der erhaltenen Informationen mit Informationen bezüglich des eingerichteten Nachrichtenobjekts, um das mindestens eine weitere, als Nachrichtenobjekt eingerichtete tragbare Endgerät zu erkennen,
- Benachrichtigen eines Nutzers, dass das mindestens eine tragbare Endgerät des Nachrichtenobjekts erkannt wurde, und
- Implementieren der Sofortnachrichtenfunktion mit dem mindestens einen weiteren tragbaren Endgerät des Nachrichtenobjekts.

25. Tragbares Endgerät nach Anspruch 24, wobei die Steuereinheit (160) ferner dazu eingerichtet ist, nach dem mindestens einen weiteren tragbaren Endgerät in einem vorbestimmten Suchzeitbereich zu suchen.

26. Tragbares Endgerät nach Anspruch 24, wobei die Steuereinheit (160) ferner dazu eingerichtet ist, den Nutzer zu benachrichtigen durch:
- Anzeigen des mindestens einen weiteren tragbaren Endgeräts als aktiv auf der Anzeigeeinheit (140) und
- Erzeugen einer Vibration oder/und eines Warntons.

27. Tragbares Endgerät nach Anspruch 17, wobei die Steuereinheit (160) ferner dazu eingerichtet ist,
- ein Informationsanforderungssignal über eine drahtlose Kurzbereichs-Kommunikation von einem anderen tragbaren Endgerät zu empfangen, das sich in einem Drahtlos-Kurzbereichs-Kommunikationsgebiet befindet, und in Antwort hierauf die Adresse des Kurzbereichs-Kommunikationsmoduls (150) an das andere tragbare Endgerät zu schicken,
- über die drahtlose Kurzbereichs-Kommunikation Nutzerinformationen bezüglich der Sofortnachrichtenfunktion mit dem anderen tragbaren Endgerät auszutauschen,
- auf Grundlage des Nachrichtenobjekts eine Verbindung über eine drahtlose Kurzbereichs-Kommunikation mit dem anderen tragbaren Endgerät zu initiieren, um die Sofortnachrichtenfunktion zu implementieren.

28. Tragbares Endgerät nach Anspruch 27, wobei die Steuereinheit ferner dazu eingerichtet ist,
- festzustellen, dass ein Nutzer des tragbaren Endgeräts eine Bedingung zur Blockierung des Nachrichtenempfangs oder eine Bedingung zur Genehmigung des Nachrichtenempfangs eingerichtet hat, und
- reaktionslos zu verharren auf das empfangene Informationsanforderungssignal, wenn die Bedingung zur Nachrichtenempfangsblockierung eingerichtet ist, derart, dass keine Nutzerinformationen ausgetauscht werden und das andere tragbare Endgerät nicht als Nachrichtenobjekt eingerichtet wird.

29. Tragbares Endgerät nach Anspruch 27, wobei die Steuereinheit ferner dazu eingerichtet ist,
- zu ermitteln, ob ein Nutzer des tragbaren Endgeräts angegeben hat, dass das andere tragbare Endgerät als Nachrichtenobjekt eingerichtet werden soll, und
- das andere tragbare Endgerät nicht als Nachrichtenobjekt einzurichten, wenn der Nutzer nicht angegeben hat, dass das andere tragbare Endgerät als Nachrichtenobjekt eingerichtet werden soll.

30. Tragbares Endgerät nach Anspruch 17, wobei die Steuereinheit ferner dazu eingerichtet ist,
- nach dem mindestens einen weiteren tragbaren Endgerät, mit dem die Sofortnachrichtenfunktion implementiert wurde, zu suchen,
- Nutzerinformationen von dem gesuchten mindestens einen weiteren tragbaren Endgerät zu erhalten und
- die Nutzerinformationen des gesuchten mindestens einen weiteren tragbaren Endgeräts, die in der Speichereinheit (130) gespeichert sind, zu aktualisieren.

31. Tragbares Endgerät nach Anspruch 30, wobei die Steuereinheit ferner dazu eingerichtet ist, die Nutzerinformationen des mindestens einen weiteren tragbaren Endgeräts zu aktualisieren durch:
- Suchen nach dem mindestens einen weiteren tragbaren Endgerät, mit dem die Sofortnachrichtenfunktion implementiert wurde, in Antwort auf den Empfang (S300) eines Suchbefehls über die Befehlseingabeeinheit (120), um Informationen zu erhalten, und
- Vergleichen (S326) der erhaltenen Informationen mit in der Speichereinheit (130) gespeicherten Informationen, die sich auf das eingerichtete Nachrichtenobjekt beziehen, um das mindestens eine weitere, als Nachrichtenobjekt eingerichtete tragbare Endgerät zu erkennen.

32. Tragbares Endgerät nach Anspruch 31, wobei die Steuereinheit (160) ferner dazu eingerichtet ist, nach dem mindestens einen zweiten tragbaren Endgerät, mit dem die Sofortnachrichtenfunktion implementiert wurde, zu suchen, indem festgestellt wird (S302, S304), dass der Suchbefehl ein nach dem Einschalten des tragbaren Endgeräts empfangener erster Befehl war oder zumindest eine vorbestimmte Zeit nach dem Empfang eines vorhergehenden Suchbefehls empfangen wurde.

## Revendications

1. Procédé d'exécution d'une fonction de messagerie instantanée dans un premier terminal portable comprenant une mémoire (130) pour stocker des informations d'utilisateur et des informations se rapportant à des objets de messagerie et un module de communication à courte portée (120) pour exécuter une communication à courte portée, le procédé comprenant :
le stockage (S204) d'informations d'utilisateur se rapportant à la fonction de messagerie instantanée dans le premier terminal portable ;
la recherche (S222), en envoyant un signal de demande d'informations par l'intermédiaire d'une communication à courte portée sans fil, d'au moins un deuxième terminal portable situé dans une zone de communication à courte portée sans fil du module de communication à courte portée du premier terminal portable et adapté à exécuter une fonction de messagerie instantanée,
l'étape de recherche comprenant en outre :
l'obtention de l'adresse d'un module de communication à courte portée de chacun de l'au moins un deuxième terminal portable ;
la détermination (S416, S428) si chacun desdits au moins un deuxième terminal portable recherché a la même adresse que celle de l'un des modules de communication à courte portée enregistré comme un objet de messagerie dans la mémoire du premier terminal portable,
d'où il résulte que l'au moins un deuxième terminal portable est adapté à exécuter une fonction de messagerie instantanée si ledit au moins un deuxième terminal portable a été enregistré avec des informations d'utilisateur d'un objet de messagerie dans le premier terminal portable ;
l'échange (S224, S228, S232), par l'intermédiaire de la communication à courte portée sans fil, d'informations d'utilisateur se rapportant à la fonction de messagerie instantanée avec l'au moins un deuxième terminal portable recherché ;
et l'initiation (S422, S436), sur la base de l'objet de messagerie, d'une connexion par l'intermédiaire de la communication à courte portée sans fil avec l'au moins un deuxième terminal portable recherché pour mettre en oeuvre la fonction de messagerie instantanée.

2. Procédé selon la revendication 1, dans lequel les informations d'utilisateur comprennent au moins l'un d'un nom d'utilisateur, d'un surnom, d'un numéro de téléphone, d'un avatar, d'une photographie d'utilisateur et d'une humeur présente de l'utilisateur.

3. Procédé selon la revendication 1, dans lequel les étapes de recherche, d'échange et d'initiation sont exécutées par l'intermédiaire d'une communication à courte portée sans fil comprenant l'une d'une Bluetooth, d'une Zigbee, d'une UWB (Bande Ultra Large) et d'un LAN (réseau local) radio.

4. Procédé selon la revendication 1, comprenant en outre la recherche (S220) de l'au moins un deuxième terminal portable lorsqu'une commande additionnelle d'objet de messagerie est reçue par l'intermédiaire d'une unité d'entrée de commande (120) d'un utilisateur du premier terminal portable.

5. Procédé selon la revendication 1, dans lequel la recherche de l'au moins un deuxième terminal portable comprend :
la transmission (S222, S228) d'informations d'utilisateur à l'au moins un deuxième terminal portable ;
la réception (S224, S232) des informations d'utilisateur de l'au moins un deuxième terminal portable ; et
l'affichage (S232) des informations d'utilisateur reçues.

6. Procédé selon la revendication 1, dans lequel le procédé comprend en outre :
la transmission (S228) des informations d'utilisateur et d'un signal de demande d'objet de messagerie à un terminal portable sélectionné par un utilisateur parmi l'au moins un deuxième terminal portable recherché ;
la réception (S230, S232) d'informations d'utilisateur et d'un signal d'autorisation d'objet de messagerie de l'au moins un deuxième terminal portable sélectionné en réponse au signal de demande d'objet de messagerie ;
le stockage (S232) des informations d'utilisateur reçues en réponse au signal d'autorisation d'objet de messagerie; et
la définition (S422, S436) de l'au moins un deuxième terminal portable sélectionné comme l'objet de messagerie.

7. Procédé selon la revendication 1, dans lequel la mise en oeuvre de la fonction de messagerie instantanée comprend :
la recherche (S412) de l'au moins un deuxième terminal portable en réponse à une commande d'affichage d'objet de messagerie par l'intermédiaire de l'unité d'entrée de commande ;
l'obtention (S414) d'informations se rapportant à l'au moins un deuxième terminal portable recherché ;
la comparaison (S416) des informations obtenues à des informations se rapportant à l'objet de messagerie établi afin de détecter l'au moins un deuxième terminal portable établi comme l'objet de messagerie ;
l'affichage (S418) d'au moins un objet de messagerie actif ; et
la mise en oeuvre (S422) de la fonction de messagerie instantanée avec l'au moins un deuxième terminal portable de l'au moins un objet de messagerie actif.

8. Procédé selon la revendication 1, dans lequel la mise en oeuvre de la fonction de messagerie instantanée comprend :
la détermination (S400, 5404) qu'un mode automatique est établi ;
la recherche (S426) de l'au moins un deuxième terminal portable conformément à un intervalle de temps de recherche prédéterminé ;
l'obtention (S426) d'informations se rapportant à l'au moins un deuxième terminal portable ;
la comparaison (S428) des informations obtenues à des informations se rapportant à l'objet de messagerie établi afin de détecter l'au moins un deuxième terminal portable établi comme l'objet de messagerie ;
la notification (S434) d'un utilisateur que l'au moins un terminal portable de l'objet de messagerie a été détecté ; et
la mise en oeuvre (S436) de la fonction de messagerie instantanée avec l'au moins un deuxième terminal portable de l'objet de messagerie.

9. Procédé selon la revendication 8, dans lequel la recherche de l'au moins un deuxième terminal portable comprend la recherche (S424) au sein d'une bande de temps de recherche prédéterminée.

10. Procédé selon la revendication 8, dans lequel la notification (S434) de l'utilisateur comprend l'affichage de l'au moins un deuxième terminal portable comme actif et la génération d'au moins l'un d'une vibration et d'un son d'avertissement.

11. Procédé selon la revendication 1, comprenant en outre :
la recherche (S322) de l'au moins un deuxième terminal portable avec lequel la fonction de messagerie instantanée a été mise en oeuvre ;
l'obtention (S322) d'informations d'utilisateur à partir de l'au moins un deuxième terminal portable recherché ; et
la mise à jour (S334) des informations d'utilisateur de l'au moins un deuxième terminal portable recherché.

12. Procédé selon la revendication 11, dans lequel la mise à jour des informations d'utilisateur de l'au moins un deuxième terminal portable comprend :
la recherche de l'au moins un deuxième terminal portable avec lequel la fonction de messagerie instantanée a été mise en oeuvre en réponse à une commande de recherche reçue (S300) par l'intermédiaire de l'unité d'entrée de commande pour obtenir des informations ; et
la comparaison (S326) des informations obtenues à des informations se rapportant à l'objet de messagerie établi afin de détecter l'au moins un deuxième terminal portable établi comme l'objet de messagerie.

13. Procédé selon la revendication 12, dans lequel la recherche de l'au moins un deuxième terminal portable avec lequel la fonction de messagerie instantanée a été mise en oeuvre comprend la détermination (S302, S304) que la commande de recherche par l'intermédiaire de l'unité d'entrée de commande soit était une première commande reçue après que le terminal portable a été mis sous tension, soit a été reçue au moins un temps prédéterminé après qu'une commande de recherche précédente a été reçue.

14. Procédé d'exécution d'une fonction de messagerie instantanée entre un premier et un deuxième terminal portable,
le premier terminal portable comprenant un module de communication à courte portée pour exécuter une communication à courte portée et
le deuxième terminal portable comprenant une mémoire (130) pour stocker des informations d'utilisateur et des informations se rapportant à des objets de messagerie et un module de communication à courte portée (150) pour exécuter une communication à courte portée,
le procédé comprenant :
le stockage (S204) d'informations d'utilisateur se rapportant à la fonction de messagerie instantanée dans le deuxième terminal portable ;
la réception (S238) dans le premier terminal portable d'un signal de demande d'informations par l'intermédiaire d'une communication à courte portée sans fil provenant du deuxième terminal portable situé dans une zone de communication à courte portée sans fil, le signal de demande d'informations étant pour la recherche, par le deuxième terminal portable, d'au moins un autre terminal portable situé dans une zone de communication à courte portée sans fil du module de communication à courte portée du deuxième terminal portable et adapté à exécuter une fonction de messagerie instantanée ;
la délivrance de l'adresse du module de communication à courte portée du premier terminal portable au deuxième terminal portable ;
la détermination (S416, S428), au niveau du deuxième terminal portable, si le premier terminal portable a la même adresse que celle de l'un des modules de communication à courte portée enregistré comme un objet de messagerie dans la mémoire du deuxième terminal portable, d'où il résulte que l'au moins un autre terminal portable est autorisé à exécuter une fonction de messagerie instantanée si ledit au moins un autre terminal portable a été enregistré avec des informations d'utilisateur d'un objet de messagerie dans le deuxième terminal portable ;
l'échange (S240, 5242, S250), par l'intermédiaire de la communication à courte portée sans fil, d'informations d'utilisateur se rapportant à la fonction de messagerie instantanée entre le premier et le deuxième terminal portable ;
et l'initiation (S422, S436), sur la base du premier terminal portable ayant été établi comme un objet de messagerie, d'une connexion par l'intermédiaire de la communication à courte portée sans fil avec le premier terminal portable pour mettre en oeuvre la fonction de messagerie instantanée.

15. Procédé selon la revendication 14, comprenant en outre :
un utilisateur du premier terminal portable établissant (S244) l'une d'une condition de blocage de réception de messagerie et d'une condition d'autorisation de réception de messagerie ; et
restant sans réponse au signal de demande d'informations reçu si la condition de blocage de réception de messagerie est établie, de sorte que des informations d'utilisateur ne sont pas échangées et que le deuxième terminal portable n'est pas établi comme un objet de messagerie.

16. Procédé selon la revendication 14, comprenant en outre :
la détermination (S250) si un utilisateur du deuxième terminal portable a indiqué que le premier terminal portable doit être établi comme un objet de messagerie ; et
le non établissement du premier terminal portable comme un objet de messagerie si l'utilisateur n'a pas indiqué que le premier terminal portable doit être établi comme un objet de messagerie.

17. Terminal portable pour exécuter une fonction de messagerie instantanée, le terminal portable comprenant :
une unité de mémoire (130) adaptée à stocker des informations d'utilisateur ;
une unité de communication à courte portée sans fil (150) adaptée à exécuter une communication à courte portée sans fil ;
une unité d'entrée de commande (120) adaptée à permettre à un utilisateur d'entrer des informations ;
une unité d'affichage (140) adaptée à afficher des informations ; et
un contrôleur (160) adapté
à commander l'unité de mémoire (130), l'unité de communication à courte portée sans fil, l'unité d'entrée de commande (120) et l'unité d'affichage (140) ;
à rechercher (S222) au moins un autre terminal portable situé dans une zone de communication à courte portée sans fil du module de communication à courte portée dudit terminal portable et adapté à exécuter une fonction de messagerie instantanée, la recherche étant exécutée en envoyant un signal de demande d'informations par l'intermédiaire d'une communication à courte portée sans fil, et en obtenant l'adresse de chaque module de communication à courte portée de chacun dudit au moins un autre terminal portable,
et dans lequel le contrôleur, à l'obtention de l'adresse d'un module de communication à courte portée d'au moins un autre terminal portable, est en outre adapté à
déterminer (S416, S428) si chacun dudit au moins un autre terminal portable recherché a la même adresse que celle de l'un des modules de communication à courte portée enregistré comme un objet de messagerie dans la mémoire dudit terminal portable, d'où il résulte que ledit au moins un autre terminal portable est autorisé à exécuter une fonction de messagerie instantanée si ledit au moins un autre terminal portable a été enregistré avec des informations d'utilisateur d'un objet de messagerie dans ledit terminal portable,
le contrôleur étant en outre adapté
à échanger (S224, S228, S232), par l'intermédiaire de la communication à courte portée sans fil, des informations d'utilisateur se rapportant à la fonction de messagerie instantanée avec l'au moins un autre terminal portable recherché,
et à initier (S424, S436), sur la base de l'objet de messagerie, une connexion par l'intermédiaire de la communication à courte portée sans fil avec l'au moins un autre terminal portable recherché pour mettre en oeuvre la fonction de messagerie instantanée.

18. Terminal portable selon la revendication 17, dans lequel l'unité de mémoire (130) est en outre adaptée à stocker des informations d'utilisateur comprenant au moins l'un d'un nom d'utilisateur, d'un surnom, d'un numéro de téléphone, d'un avatar, d'une photographie d'utilisateur et d'une humeur présente de l'utilisateur.

19. Terminal portable selon la revendication 17, dans lequel l'unité de communication à courte portée (150) comprend l'un d'un module Bluetooth, d'un module Zigbee, d'un module UWB (Bande Ultra Large) et d'un module LAN (réseau local) radio.

20. Terminal portable selon la revendication 17, dans lequel le contrôleur (160) est en outre adapté à rechercher (S220) l'au moins un autre terminal portable lorsqu'une commande additionnelle d'objet de messagerie est reçue par l'intermédiaire de l'unité d'entrée de commande (120).

21. Terminal portable selon la revendication 17, dans lequel le contrôleur (160) est en outre adapté à rechercher l'au moins un autre terminal portable en :
transmettant (S222, S228) des informations d'utilisateur à l'au moins un autre terminal portable par l'intermédiaire de l'unité de communication à courte portée (150) ;
recevant (S224, S232) des informations d'utilisateur de l'au moins un autre terminal portable par l'intermédiaire de l'unité de communication à courte portée (150); et
affichant (S232) les informations d'utilisateur reçues sur l'unité d'affichage (140).

22. Terminal portable selon la revendication 17, dans lequel le contrôleur (160) est en outre adapté à établir l'objet de messagerie en :
transmettant (S228) les informations d'utilisateur et un signal de demande d'objet de messagerie par l'intermédiaire de l'unité de communication à courte portée (150) à un terminal portable choisi par l'utilisateur parmi l'au moins un autre terminal portable recherché ;
recevant (S230, S232) des informations d'utilisateur et un signal d'autorisation d'objet de messagerie par l'intermédiaire de l'unité de communication à courte portée (150) de l'au moins un autre terminal portable choisi en réponse au signal de demande d'objet de messagerie ;
stockant (S232) les informations d'utilisateur reçues dans l'unité de mémoire (130) en réponse au signal d'autorisation d'objet de messagerie; et
définissant (S422, S436) l'au moins un autre terminal portable choisi comme l'objet de messagerie.

23. Terminal portable selon la revendication 17, dans lequel le contrôleur (160) est en outre adapté à mettre en oeuvre la fonction de messagerie instantanée en :
recherchant (S412) l'au moins un autre terminal portable en réponse à une commande d'affichage d'objet de messagerie reçue par l'intermédiaire de l'unité d'entrée de commande ;
obtenant (S414) des informations se rapportant à l'au moins un autre terminal portable recherché ;
comparant (S416) les informations obtenues à des informations se rapportant à l'objet de messagerie établi afin de détecter l'au moins un autre terminal portable établi comme l'objet de messagerie ;
affichant (S418) au moins un objet de messagerie actif sur l'unité d'affichage (140) ; et
mettant en oeuvre (S422) la fonction de messagerie instantanée avec l'au moins un autre terminal portable de l'au moins un objet de messagerie actif.

24. Terminal portable selon la revendication 17, dans lequel le contrôleur (160) est en outre adapté à mettre en oeuvre la fonction de messagerie instantanée en :
déterminant qu'un mode automatique est établi ;
recherchant l'au moins un autre terminal portable conformément à un intervalle de temps de recherche prédéterminé ;
obtenant des informations se rapportant à l'au moins un autre terminal portable ;
comparant les informations obtenues à des informations se rapportant à l'objet de messagerie établi afin de détecter l'au moins un autre terminal portable établi comme l'objet de messagerie ;
notifiant un utilisateur que l'au moins un terminal portable de l'objet de messagerie a été détecté ; et
mettant en oeuvre la fonction de messagerie instantanée avec l'au moins un autre terminal portable de l'objet de messagerie.

25. Terminal portable selon la revendication 24, dans lequel le contrôleur (160) est en outre adapté à rechercher l'au moins un autre terminal portable à l'intérieur d'une bande de temps de recherche prédéterminée.

26. Terminal portable selon la revendication 24, dans lequel le contrôleur (160) est en outre adapté à notifier l'utilisateur en :
affichant l'au moins un autre terminal portable comme actif sur l'unité d'affichage (140) ; et
générant au moins l'un d'une vibration et d'un son d'avertissement.

27. Terminal portable selon la revendication 17, dans lequel le contrôleur (160) est en outre adapté à :
recevoir un signal de demande d'informations par l'intermédiaire d'une communication à courte portée sans fil d'un autre terminal portable situé dans une zone de communication à courte portée sans fil et, en réponse à celui-ci, fournir l'adresse du module de communication à courte portée (150) audit autre terminal portable ;
échanger, par l'intermédiaire de la communication à courte portée sans fil, des informations d'utilisateur se rapportant à la fonction de messagerie instantanée avec l'autre terminal portable ;
initier, sur la base de l'objet de messagerie, une connexion par l'intermédiaire de la communication à courte portée sans fil avec l'autre terminal portable pour mettre en oeuvre la fonction de messagerie instantanée.

28. Terminal portable selon la revendication 27, dans lequel le contrôleur est en outre adapté à :
déterminer qu'un utilisateur dudit terminal portable a établi l'une d'une condition de blocage de réception de messagerie et d'une condition d'autorisation de réception de messagerie ; et
rester sans réponse au signal de demande d'informations reçu si la condition de blocage de réception de messagerie est établie, de telle manière que des informations d'utilisateur ne sont pas échangées et que l'autre terminal portable n'est pas établi comme un objet de messagerie.

29. Terminal portable selon la revendication 27, dans lequel le contrôleur est en outre adapté à :
déterminer si un utilisateur dudit terminal portable a indiqué que l'autre terminal portable doit être établi comme un objet de messagerie ; et
ne pas établir l'autre terminal portable comme un objet de messagerie si l'utilisateur n'a pas indiqué que l'autre terminal portable doit être établi comme un objet de messagerie.

30. Terminal portable selon la revendication 17, dans lequel le contrôleur est en outre adapté à :
rechercher l'au moins un autre terminal portable avec lequel la fonction de messagerie instantanée a été mise en oeuvre ;
obtenir des informations d'utilisateur de l'au moins un autre terminal portable recherché ; et
mettre à jour les informations d'utilisateur de l'au moins un autre terminal portable recherché stockées dans l'unité de mémoire (130).

31. Terminal portable selon la revendication 30, dans lequel le contrôleur est en outre adapté à mettre à jour les informations d'utilisateur de l'au moins un autre terminal portable en :
recherchant l'au moins un autre terminal portable avec lequel la fonction de messagerie instantanée a été mise en oeuvre en réponse à la réception (S300) d'une commande de recherche par l'intermédiaire de l'unité d'entrée de commande (120) pour obtenir des informations ; et
comparant (S326) les informations obtenues à des informations stockées dans l'unité de mémoire (130) qui se rapportent à l'objet de messagerie établi afin de détecter l'au moins un autre terminal portable établi comme l'objet de messagerie.

32. Terminal portable selon la revendication 31, dans lequel le contrôleur est en outre adapté à rechercher l'au moins un deuxième terminal portable avec lequel la fonction de messagerie instantanée a été mise en oeuvre en déterminant (S302, S304) que la commande de recherche soit était une première commande reçue après que ledit terminal portable a été mis sous tension, soit a été reçue au moins un temps prédéterminé après qu'une commande de recherche précédente a été reçue.
